# EUROPÄISCHE PATENTANMELDUNG

(11) **EP 2 837 766 A1**
(43) Veröffentlichungstag der Anmeldung: **18.02.2015**
(21) Anmeldenummer: 13180458.5
(22) Anmeldetag: 14.08.2013
(51) Int. Cl.: E06B 3/54

(54) **Verfahren zum Ausfüllen einer Fuge mit einem Kleb- und/oder Dichtstoff sowie System zum Ausfüllen einer Fuge mit einem Kleb- und/oder Dichtstoff**

(71) Anmelder: Sika Technology AG, 6340 Baar (CH)
(72) Erfinder: Buck, Manuel, 5412 Gebenstorf (CH)
(74) Vertreter: Sika Patent Attorneys

(57) **Zusammenfassung**

Die Erfindung betrifft ein Verfahren zum Ausfüllen einer Fuge (12) mit einem Kleb- und/oder Dichtstoff (22), umfassend:
a) Positionieren von einem ersten Teil, insbesondere einem Insert (11), und einem zweiten Teil, insbesondere einem Rahmen (10), so dass erstes und zweites Teil die Fuge (12) ausbilden;
b) Einbringen eines beweglichen Abstandshalters (24a bis 24h) in die Fuge (12);
c) Positionieren eines Düsenelementes (23) über der Fuge (12);
d) Verfahren des Düsenelementes (23) entlang der Fuge (12) derart, dass das Düsenelement (23) an den Abstandshalter (24a bis 24h) stößt und diesen vorwärtsbewegt; und
e) Ausstoßen des Kleb- und/oder Dichtstoffes (22) aus einer Austrittsdüse des Düsenelementes (23) während des Schrittes d).

## Beschreibung

### Technisches Gebiet

Die Erfindung betrifft ein Verfahren zum Ausfüllen einer Fuge mit einem Kleb- und/oder Dichtstoff nach Anspruch 1, die Verwendung eines Abstandshalters nach Anspruch 10, ein System zum Ausfüllen einer Fuge mit einem Dicht- und/oder Klebstoff nach Anspruch 11 sowie einen Abstandshalter nach Anspruch 14.

### Stand der Technik

Aus dem Stand der Technik sind Vorrichtungen zum Ausfüllen einer Fuge mit einem Kleb- und/oder Dichtstoff bekannt.

Beispielsweise ist es bekannt, ein Insert in einem zu verklebenden oder abzudichtenden Rahmen mittels Zentrierelementen zu positionieren. Es ist möglich, ein derartiges (auch als Abstandshalter dienendes) Zentrierelement durch ein Klebeband zu ersetzen. Eine weitere Möglichkeit der Positionierung eines Inserts in einen Rahmen wird in der WO 2012/001005 A1 beschrieben. Durch so genannte hohle "verlorene Klötze", wird ein Insert in einem Rahmen ausgerichtet und in einer bestimmten Position gehalten. Die Klötze verbleiben in der Fuge auch nach dem Ausfüllen der Fuge mit einem Kleb- oder Dichtstoff.

In diesem Zusammenhang wird es als nachteilhaft empfunden, dass eine hohe Anzahl von Zentrierelementen eingesetzt werden muss, um ein zufriedenstellendes Ausfüllen der Fuge zu erreichen. Dies liegt daran, dass zwischen zwei Zentrierelementen (Abstandshaltern) ein Zwischenraum verbleibt, der umso größer ist, je weniger Zentrierelemente eingesetzt werden. Innerhalb dieses Zwischenraumes ist die Fuge nicht klar definiert. Je nach Material von Rahmen bzw. Insert kann die Fuge selbst über kurze Abschnitte große Schwankungen in ihrer Dicke aufweisen. Dies kann im Stand der Technik grundsätzlich nur durch das Bereitstellen weiterer Zentrierelemente behoben (oder reduziert) werden. Im Stand der Technik ist es also grundsätzlich problematisch, dass entweder ein hoher Aufwand betrieben werden muss (Einsatz einer Vielzahl von Zentrierelementen) oder erhebliche Abstriche in der Qualität der Fugenausfüllung hingenommen werden müssen.

Es ist Aufgabe der Erfindung, ein Verfahren sowie ein System zum Ausfüllen einer Fuge mit einem Kleb- und/oder Dichtstoff vorzuschlagen, bei dem mit geringem Aufwand eine zufriedenstellende (konstante) Ausfüllung einer Fuge erreicht werden kann. Weiterhin soll ein Abstandshalter sowie eine Verwendung eines Abstandshalters vorgeschlagen werden.

### Darstellung der Erfindung

Diese Aufgabe wird durch ein Verfahren nach Anspruch 1, eine Verwendung nach Anspruch 10, ein System nach Anspruch 11 sowie ein Abstandshalter nach Anspruch 14 gelöst.

Insbesondere wird die Aufgabe gelöst durch ein Verfahren zum Ausfüllen einer Fuge mit einem Kleb- und/oder Dichtstoff, umfassend die Schritte:
a) Positionieren von einem ersten Teil, insbesondere einem Insert, und einem zweiten Teil, insbesondere einem Rahmen, so dass erstes und zweites Teil eine Fuge ausbilden;
b) Einbringen eines beweglichen Abstandshalters in die Fuge;
c) Positionieren eines Düsenelementes über der Fuge;
d) Verfahren des Düsenelementes entlang der Fuge derart, dass das Düsenelement an den Abstandshalter stößt und diesen vorwärtsbewegt; und
e) Ausstoßen von Kleb- und/oder Dichtstoff aus einer Austrittsöffnung des Düsenelementes während des Schrittes d).

Ein Kerngedanke der Erfindung liegt darin, dass ein beweglicher Abstandshalter vorgesehen wird, der über ein ebenso bewegliches Düsenelement vorwärtsbewegt wird. Das Düsenelement schiebt also den Abstandshalter durch die mit einem Kleb- und/oder Dichtstoff zu füllende Fuge. Dadurch wird gewährleistet, dass das Düsenelement stets in einem kurzen Abstand hinter dem sich bewegenden Abstandshalter Klebstoff und/oder Dichtstoff in die Fuge einfüllt. Dies bedeutet weiterhin, dass die Einfüllung des Klebstoffes bzw. Dichtstoffes stets räumlich nah zu einem Abstandshalter veranlasst wird. Durch diese räumliche Nähe wird eine hohe Konstanz der Fugenbreite erreicht. Der Abstandshalter definiert dabei die Fugenbreite. Insgesamt kann mit einer geringen Zahl von Abstandshaltern, ggf. mit nur einem Abstandshalter, eine konstante Ausfüllung einer Fuge mit einem Kleb- und/oder Dichtstoff erreicht werden. Mit einer einfachen Maßnahme werden somit gleichzeitig zwei sich grundsätzlich widersprechende Anforderungen erfüllt, nämlich einerseits eine konstante Ausfüllung der Fuge zu gewährleisten und andererseits den herstellungstechnischen Aufwand zu reduzieren.

Gemäß einem allgemeinen Erfindungsgedanken wird mindestens ein Düsenelement und mindestens ein in räumlicher Nähe zu dem Düsenelement angeordneter Abstandshalter gleichzeitig durch eine Fuge bewegt. Der räumliche Abstand von Düsenelement und Abstandhalter ist vorzugsweise kleiner gleich 5 Zentimeter, noch vorzugsweise kleiner gleich 1 Zentimeter. Eine Weiterbildung dieses allgemeinen Gedankens kann Düsenelement und Abstandshalter durch eine gemeinsame Antriebseinrichtung vorwärtsbewegt werden. Es ist jedoch auch denkbar für Düsenelement und Abstandshalter jeweils eine separate Antriebseinrichtung bereitzustellen, die Düsenelement und Abstandshalter mit der gleichen Geschwindigkeit vorwärtsbewegen. Verfahrensmäßig kann also das Merkmal d) dahingehend verallgemeinert werden, dass Düsenelement und Abstandshalter mit gleicher Geschwindigkeit und im geringem Abstand zueinander bewegt werden (der Abstand kann beispielsweise kleiner gleich 5 Zentimeter oder besser kleiner gleich 1 Zentimeter oder sogar auf 0 reduziert sein).

Als Fuge soll insbesondere ein Zwischenraum zwischen zwei benachbarten Teilen verstanden werden. Im Falle eines Inserts, das in einen Rahmen eingebracht werden soll, ist die Fuge ebenfalls rahmenförmig bzw. rechteckförmig und bildet den Zwischenraum zwischen Innenkante des Rahmens und Außenkante des Inserts. Als Insert kann insbesondere ein Glas zum Einsatz kommen. Vorzugsweise handelt es sich bei dem Insert um die Abdeckung (Glas-Abdeckung) für einen Solarkollektor oder ein Photovoltaik-Element.

Der Abstandshalter kann (im Falle der Ausfüllung einer Fuge zwischen einem Insert und einem Rahmen) insbesondere als Zentrierelement fungieren, was bedeutet, dass der Abstandshalter (ggf. zusammen mit weiteren Abstandshaltern) die Position des Inserts innerhalb des Rahmens definiert. Dazu können mehrere (bewegliche) Abstandshalter vorgesehen werden. Andererseits definiert der Abstandshalter auch die Fugenbreite und zwar insbesondere in einem kurzen (zeitlichen bzw. räumlichen) Abstand zum Ort, an dem über das Düsenelement Kleb- und/oder Dichtstoff eingebracht wird. Der Abstandshalter kann vollständig in die Fuge positioniert sein. Bevorzugt ist es jedoch, wenn der Abstandshalter nur teilweise innerhalb der Fuge angeordnet ist und diese teilweise überragt.

Bei dem Kleb- und/oder Dichtstoff kann es sich um einen Kleb- und/oder Dichtstoff auf Silikonbasis handeln. Unter einem Klebstoff soll vorzugsweise ein Stoff verstanden werden, der eine stoffschlüssige Verbindung zwischen zwei Teilen ermöglicht. Bei einem Dichtstoff handelt es sich vorzugsweise um einen elastischen Dichtstoff. Es kommen jedoch auch Zement und andere ggf. unelastische Dichtstoffe in Frage.

Das Verfahren wird vorzugsweise für thermische Solarkollektoren, Photovoltaik-Anlagen, Trennwände oder Fenster eingesetzt, insbesondere für thermische Solarkollektoren.

Vorzugsweise wird der Abstandshalter beim Erreichen eines Fugenendes oder einer Fugenecke aus der Fuge entfernt. Alternativ ist es auch denkbar, dass der Abstandshalter beim Erreichen eines Fugenendes oder einer Fugenecke in der Fuge verbleibt. Wenn der Abstandshalter jedoch beim Erreichen eines Fugenendes oder einer Fugenecke entfernt wird, kann das bewegliche Düsenelement auf einfache Weise weiterverfahren werden, ohne dass eine Unterbrechung der Ausfüllung der Fuge stattfindet. Dadurch wir das Verfahren weiter vereinfacht und beschleunigt.

Vorzugsweise weist der Abstandshalter eine Anlaufschräge derart auf, dass er beim Anstoßen an ein Fugenende oder eine Fugenecke herausgehoben wird. Alternativ oder zusätzlich kann an einem Fugenende oder einer Fugenecke eine Anlaufschräge vorgesehen werden derart, dass der Abstandshalter beim Anlaufen gegen die Anlaufschräge des Fugenendes oder der Fugenecke herausgehoben wird. Eine Anlaufschräge an einem Fugenende oder einer Fugenecke kann beispielsweise dadurch realisiert werden, dass die Fuge (an ihrem Grund) eine Rampe aufweist. Bevorzugt ist es, wenn der Abstandshalter eine Anlaufschräge aufweist. Diese kann beispielsweise durch einen konvexen Abschnitt (an der Unterseite) des Abstandshalters realisiert werden. Im Allgemeinen ist eine Anlaufschräge des Abstandshalters an der Unterseite vorgesehen. Die Unterseite soll dabei diejenige Seite des Abstandshalters sein, die in Richtung Fuge weist. In einer konkreten Ausführungsform ist die Anlaufschräge des Abstandshalters durch eine konvexe Rippe ausgebildet. Diese konvexe Rippe ist vorzugsweise auch derjenige Abschnitt des Abstandshalters, der sich innerhalb der Fuge befindet und letztlich die Fugenweite definiert.

In einer konkreten Ausführungsform sind mehrere (bewegliche) Abstandshalter vorgesehen, die in die Fuge eingebracht werden. Dadurch kann die Positionierung der beiden Teile, die die Fuge ausbilden, weiter verbessert werden. Besonders bevorzugt ist es dabei, wenn mehrere Abstandshalter (beispielsweise zwei Abstandshalter) gleichzeitig durch das Düsenelement vorwärtsbewegt werden. Das Düsenelement kann also mehrere Abstandshalter gleichzeitig einsammeln, so dass diese (beispielsweise an einem Fugenende oder einer Fugenecke) entfernt werden können. Dadurch wird ein einfaches und dennoch schnelles Verfahren realisiert.

Die Fuge kann mehrere einen Winkel (beispielsweise größer 10 Grad, insbesondere gleich 90 Grad) gegeneinander aufweisende Teil-Fugen umfassen. In jeder der Teil-Fugen wird vorzugsweise mindestens ein beweglicher Abstandshalter eingebracht. Dadurch wird auf einfache Weise eine exakte Positionierung des ersten und zweiten Teils erreicht. Insbesondere kann, falls das erste Teil ein Insert (Glasscheibe) ist und das zweite Teil ein Rahmen, eine exakte Zentrierung des Inserts ermöglicht werden.

In einer konkreten Ausgestaltung des Verfahrens hat die Fuge eine rechteckförmige (allg.: viereckige) Form und weist vier Teil-Fugen auf, wobei je zwei aneinander grenzende Teilfugen vorzugsweise senkrecht zueinander orientiert sind. In jeder Teil-Fuge ist (sind) vorzugsweise mindestens ein, weiter vorzugsweise genau zwei, Abstandshalter eingebracht. Besonders bevorzugt ist es dabei, wenn je zwei Abstandshalter (vor einem Verschieben derselben) in je einen Eckbereich der Fuge eingebracht werden. In diesem Sinne soll ein Eckbereich insbesondere dann als Eckbereich verstanden werden, wenn der jeweilige "Bereich" sich (von einer bestimmten Ecke ausgehend) über weniger als 30% (insbesondere weniger als 15%) der an die Ecke angrenzenden Teil-Fuge erstreckt. Durch eine derartige Anordnung der Abstandshalter in den Teil-Fugen wird eine exakte Positionierung des ersten und zweiten Teils erreicht. Gleichzeitig ist der Aufwand für das Verfahren gering und die Geschwindigkeit hoch.

Vorzugsweise behält das Düsenelement beim Durchfahren einer Fuge (bzw. Entlangfahren entlang der Fuge) seine Orientierung bei. Unter der Orientierung des Düsenelementes soll insbesondere dessen Winkel-Ausrichtung gegenüber einem feststehenden Koordinatensystem (beispielsweise definiert durch Länge, Breite und Höhe eines Rahmens) verstanden werden. Das Düsenelement ändert seine Orientierung also insbesondere nicht, wenn es eine Fugenecke erreicht und diese durchläuft. Vergleichbar ist dies beispielsweise mit einer Person, die vier Schritte vorwärtsmacht und dann vier Schritte seitwärts und weiterhin in dieselbe Richtung blickt. In jedem Fall wird durch eine derartige Beibehaltung der Orientierung des Düsenelementes ein schnelles Verfahren derselben auch in einem Eckbereich ermöglicht. Dadurch wird das Verfahren auf einfache Weise weiter beschleunigt.

Vorzugsweise ist bei einem Fugeneck zumindest eine der innenseitig an das Fugeneck angrenzenden Flächenabschnitte des ersten oder zweiten Teils mit einer Abdeckung, insbesondere einem Tape (Klebeband), abgedeckt. Bei der Bewegung des Düsenelements handelt es sich vorzugsweise bei dem mit einer Abdeckung versehenen Flächenabschnitt um denjenigen Flächenabschnitt, der später durchlaufen wird, wenn das Düsenelement den Eckbereich durchläuft. Durch das Vorsehen einer derartigen Abdeckung kann Kleb- und/oder Dichtstoff, der evtl. an der Düse anhaftet, abgestrichen werden. Insgesamt ist es ausreichend, wenn ausschließlich die zeitlich später durchlaufen werdenden Flächenabschnitte mit einer Abdeckung versehen werden. Es ist also nicht notwendig, dass sämtliche an die Fugen angrenzenden Flächenabschnitte mit einer Abdeckung versehen werden. Insgesamt kann durch diese Maßnahme ein sauberes Arbeiten ermöglicht werden, so dass ein weiterer Verfahrensschritt des Entfernens von verschmierten Dicht- und/oder Klebstoffresten entfallen kann bzw. das Entfernen sich darauf reduziert, die vorher angeordnete Abdeckung (insbesondere das vorher angeordnete Tape) zu entfernen, was nur wenige Sekunden in Anspruch nimmt.

Der Kleb- und/oder Dichtstoff, der zum Einsatz kommt, hat vorzugsweise eine Viskosität (im Ausgangszustand, während des Ausbringens aus der Austrittsdüse z.B. bei 23°C) derart, dass die nach dem Ausfüllen der Fuge auf die Fuge einwirkenden Kräfte (Schub- oder Scherkräfte) kompensiert werden können (also die Fugenweite und die Orientierung der Teile im Bereich des Einbringens des Kleb- und/oder Dichtstoffes sich nicht ändert). Die Viskosität weist (bei 23°C) vorzugsweise einen Wert von mindestens 10³, weiter vorzugsweise mindestens 10⁴, noch weiter vorzugsweise mindestens 10⁵ mPa * s auf.

Besonders bevorzugt weist die Viskosität einen Wert von 10³ - 2.5 x 10⁶ mPa * s, insbesondere 10⁴ - 2 x 10⁶ mPa * s, am meisten bevorzugt 10⁵ - 10⁶ mPa * s, gemessen nach DIN 53018, mittels einem Anton-Paar Rheometer (Physica MCR 101, Tegelplatte CP 25-1, Temperatur 23 °C, Scherrate 0.5 sec⁻¹), auf.

Durch einen derartigen Kleb- und/oder Dichtstoff kann das Verfahren weiter beschleunigt werden, sowie die Anzahl von Abstandshaltern ggf. reduziert werden.

Die oben genannte Aufgabe wird weiterhin gelöst durch die Verwendung eines Abstandshalters mit einer Anlaufschräge zum Einstellen des Abstandes einer Fuge zwischen zwei Teilen, insbesondere zwischen einem Insert und einem Rahmen, zum Befüllen der Fuge mit einem Kleb- und/oder Dichtstoff. Durch die Verwendung eines derartigen Abstandshalters kann dieser besonders einfach beim Erreichen eines Fugenendes oder einer Fugenecke (quasi-automatisch) herausgehoben werden. Dadurch muss das Verfahren für eine Entfernung des Abstandshalters nicht unterbrochen werden.

Die oben genannte Aufgabe wird weiterhin gelöst durch ein System zum Ausfüllen einer Fuge mit einem Dicht- und/oder Klebstoff, insbesondere gemäß dem oben beschriebenen Verfahren und/oder für die oben beschriebene Verwendung, umfassend:
- Ein bewegliches Düsenelement mit einer Austrittsöffnung;
- einen beweglichen Abstandshalter und
- eine Anlaufschräge zum Anheben des Abstandshalters beim Erreichen eines Fugenendes oder einer Fugenecke.

Mit einem derartigen System kann der Abstandshalter besonders einfach aus der Fuge entfernt werden, was das Verfahren mit einfachen Mitteln beschleunigt. Vorzugsweise weist der Abstandshalter die Anlaufschräge auf. Weiter vorzugsweise wird die Anlaufschräge durch einen konvexen Abschnitt (z.B. eine konvexe Rippe beispielsweise an der Unterseite des Abstandshalters) ausgebildet.

Das System umfasst vorzugsweise weiterhin einen Kleb- und/oder Dichtstoff, der eine Viskosität von mindestens 10³, vorzugsweise mindestens 10⁴, noch weiter vorzugsweise mindestens 10⁵ mPa * s aufweist. Durch einen derartigen (hochviskosen) Klebstoff wird es ermöglicht, eine ausgefüllte Fuge durch den Klebstoff bzw. Dichtstoff selbst zu stabilisieren.

Die oben genannte Aufgabe wird weiterhin gelöst durch einen Abstandshalter für ein Verfahren zum Ausfüllen einer Fuge mit einem Kleb- und/oder Dichtstoff, insbesondere für das Verfahren der oben beschriebenen Art und/oder für die Verwendung der oben beschriebenen Art und/oder das System der oben beschriebenen Art, wobei der Abstandshalter eine Anlaufschräge aufweist derart, dass der Abstandshalter beim Anstoßen an eine Kante nach oben gehoben wird. Bezüglich der Vorteile wird auf die obigen Ausführungen zur Verwendung und zum System verwiesen. Der Abstandshalter weist vorzugsweise einen quaderförmigen Grundkörper auf. Alternativ oder zusätzlich kann der Abstandshalter eine (vorzugsweise konvexe) die Anlaufschräge ausbildende Rippe aufweisen. Diese Rippe ist in einer konkreten Ausführungsform an einer der Quaderflächen (z.B. der Unterseite des Quaders) angeordnet. Über eine derartige Rippe kann der Abstandshalter besonders einfach in einer Fuge gleiten. Gleichzeitig wird die Rippe genutzt, um den Abstandshalter aus der Fuge herauszuheben. Insgesamt kann dadurch die Ausfüllung einer Fuge einfach, schnell und genau erfolgen.

Ein zentraler Gedanke der vorliegenden Erfindung liegt also darin, eine Fuge zwischen zwei Teilen (insbesondere einen Insert und einen Rahmen) mit Abstandshaltern zu versehen, wobei beim Einfüllen des Dicht- und/oder Klebstoffes durch das Düsenelement der Abstandshalter zusammen mit dem Düsenelement entlang der Fuge verschoben wird, bis er am Ende der Fuge bzw. an eine Ecke der Fuge aus dieser herausgehoben wird. Um dieses Herausheben zu ermöglichen, kann die Fuge (beispielsweise ein den Fugengrund ausbildender Rahmen) eine Rampe aufweisen. Eine derartige Rampe (Anlaufstelle) kann auch außerhalb der Fuge oder sogar außerhalb eines Rahmens (beispielsweise auf bzw. in einem Hilfsrahmen) angeordnet sein. Eine derartige Rampe kann gefedert gelagert sein bzw. eine Feder umfassen beispielsweise derart, dass einerseits der Abstandshalter hinausgleiten kann und die Rampe (Anlaufstelle) von dem Düsenelement nach unten gedrückt werden kann. Grundsätzlich wäre es auch möglich, den Abstandshalter durch eine separate Vorrichtung (Maschine) zu entnehmen (z.B. durch Greifen oder ähnliches).

Alternativ (bevorzugt) weist der Abstandshalter (an seiner Unterseite) eine Abschrägung auf. Insgesamt wird dadurch erreicht, dass eine aktive Entnahme des Abstandshalters entfällt. Durch das Verschieben des Abstandshalters entlang der Fuge wird eine gleichbleibende Breite der Fuge gewährleistet. Bei dem Abstandshalter handelt es sich vorzugsweise um einen Klotz (Holzklotz).

Weitere Ausführungsformen ergeben sich aus den Unteransprüchen.

### Kurze Beschreibung der Zeichnungen

Nachfolgend wird die Erfindung noch hinsichtlich weiterer Merkmale und Vorteile anhand eines Ausführungsbeispiels beschrieben, das anhand der Abbildungen näher erläutert wird.

Hierbei zeigen:
- Fig. 1: eine Ansicht von oben auf ein Insert und einen Rahmen, sowie ein System zum Einfüllen von Kleb- und/oder Dichtstoff in eine Fuge;
- Fig. 2: die Anordnung gemäß Fig. 1 entlang der Schnittlinie II-II in Fig. 1;
- Fig. 3: einen Abstandshalter mit einem Ausschnitt einer Fugenwand; und
- Fig. 4: den Abstandshalter und den Ausschnitt einer Fugenwand in einer von Fig. 3 abweichenden Position zueinander.

### Weg zum Ausführen der Erfindung

In der nachfolgenden Beschreibung werden für gleiche und gleich wirkende Teile dieselben Bezugsziffern verwendet.

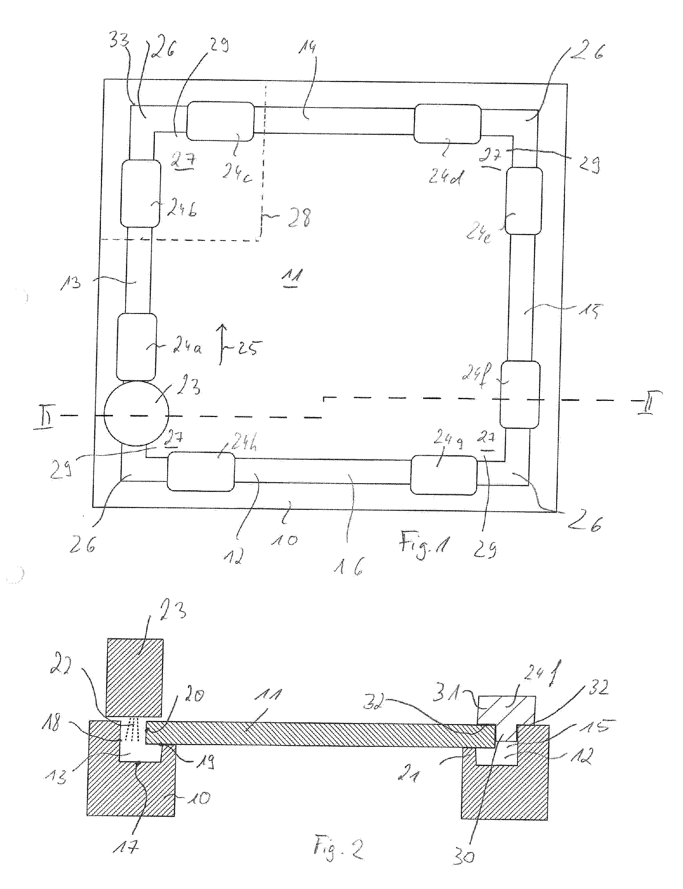

Die schematischen Fig. 1 und 2 zeigen einen Rahmen 10 sowie ein innerhalb des Rahmens 10 angeordnetes Insert 11 (z.B. Glasscheibe). Zwischen Rahmen 10 und Insert 11 befindet sich eine (rechteckförmige) Fuge 12 mit Teil-Fugen 13, 14, 15 und 16, die jeweils einen geraden Abschnitt der Fuge 12 definieren. Ein Fugengrund 17 (siehe Fig. 2) wird durch den Rahmen 10 definiert. Weiterhin definiert der Rahmen 10 eine erste Fugenwand 18. Eine zweite Fugenwand 19 wird teilweise durch den Rahmen 10 definiert und eine Außenkante 20 des Inserts 11. Der innenseitig am Rahmen 10 verlaufende Vorsprung 21 dient einerseits als Auflage für das Insert 11 und andererseits als dichtendes Element, um zu verhindern, dass Kleb- oder Dichtstoff unter das Insert 11 läuft. Insgesamt hat die Fuge 12 einen L-förmigen Querschnitt (vgl. Fig. 2).

Ein Dicht- und/oder Klebstoff 22 wird über ein Düsenelement 23 in die Fuge 12 gefüllt. In der Fuge 12 sind Abstandshalter 24a bis 24h angeordnet. Die Abstandshalter 24b bis 24h sind dabei in einer Grundposition, also in einer Position, bevor der Klebstoff eingefüllt wird. Der erste Abstandshalter 24a wurde bereits durch das Düsenelement 23 in Richtung eines Pfeiles 25 (in Fig. 1 nach oben) verschoben. Der Pfeil 25 gibt die momentane Bewegungsrichtung des Düsenelementes 23 an. Insgesamt durchläuft die Düse 25 beim vorliegenden Beispiel zuerst die Teil-Fuge 13, darauf die Teil-Fuge 14, darauf die Teil-Fuge 15 und zuletzt die Teil-Fuge 16, bis sie wieder die erste Teil-Fuge 13 erreicht. Sobald das Düsenelement 23 zusammen mit den jeweils in einer Teil-Fuge 13, 14, 15 und 16 angeordneten Abstandshaltern 24a bis 24h die jeweils nächste Ecke erreicht, werden diese Abstandshalter in der Ecke 26 herausgeschoben. Wenn also das Düsenelement 23 einmal durch die gesamte Fuge 12 verfährt, werden alle (acht) Abstandshalter 24a bis 24h sukzessive entfernt. In der Grundposition der Abstandshalter 24a bis 24h (in Fig. 1 befinden sich nur die Abstandshalter 24b bis 24h in der Grundposition) befinden sich diese in einem jeweiligen Eckbereich 27. Ein Eckbereich (dem die Abstandshalter 24b und 24c zugeordnet sind) ist exemplarisch durch die gestrichelte Linie 28 gekennzeichnet. Der (jeweilige) Eckbereich 28 erstreckt sich beispielsweise über 30% der zugeordneten Teil-Fugen. Innerhalb dieses Eckbereiches 28 sind dann je zwei Abstandshalter 24b, 24c (in ihrer Grundposition) angeordnet. Weiterhin können im Eckbereich 28 bzw. auf an die Ecken 26 angrenzenden Flächenabschnitten 29 Klebebänder (nicht in den Figuren gezeigt) angeordnet werden. Die Klebebänder sind vorzugsweise ausschließlich in Flächenabschnitten 29 angeordnet, die an ein Fugeneck 26 angrenzen (innerhalb eines Eckbereiches 28) und beim Durchlaufen des jeweiligen Eckbereiches 28 durch das Düsenelement 23 erst nach der Richtungsänderung der Düse 23 durchlaufen werden. Die (nicht gezeigten) Klebebänder können beispielsweise eine Breite von mindestens 2 cm oder mindestens 3 cm aufweisen. Eine obere Grenze für die Breite kann beispielsweise höchstens 10 cm oder höchstens 7 cm sein. Anstelle von Klebebändern kann eine andere Art und Weise der Abdeckung der genannten Flächenabschnitte 29 realisiert werden (die ebenfalls die oben genannten Maße aufweisen kann).

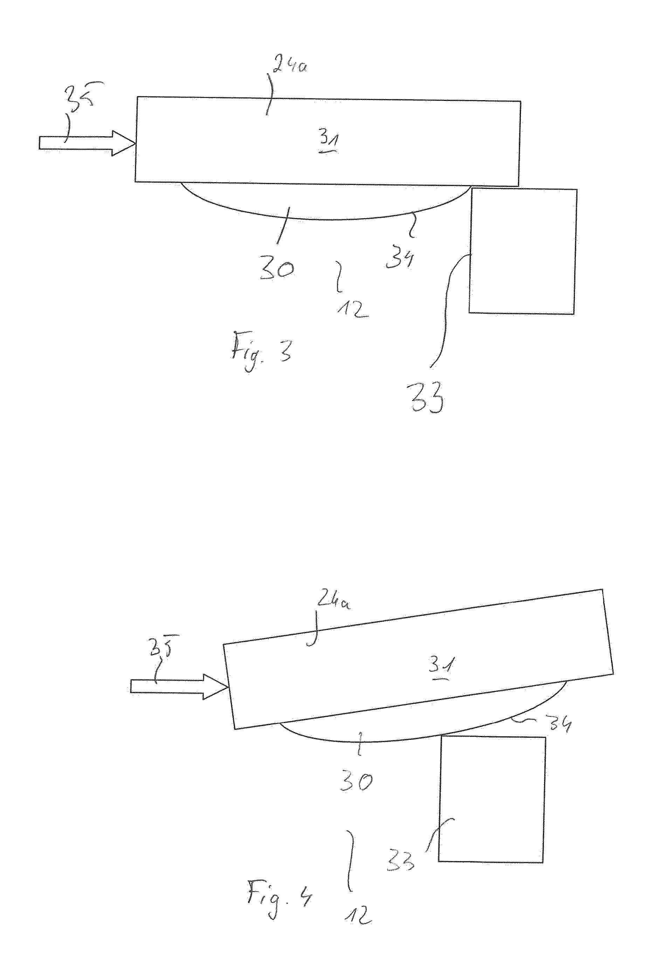

Die geometrische Ausgestaltung der Abstandshalter 24a bis 24h lässt sich insbesondere Fig. 2 (rechts) und den Fig. 3 und 4 entnehmen. Wie man in Fig. 2 erkennen kann, umfasst jeder Abstandshalter eine Rippe 30, die innerhalb der Fuge 12 gleitet. Die Rippe 30 befindet sich auf einer Seite der Abstandshalter 24a bis 24h, die der Fuge 12 zugewandt ist. Durch den rippenartigen Vorsprung 30 gleiten die Abstandshalter 24a bis 24h besonders reibungsarm und effektiv in der Fuge 12. Neben der Rippe 30 weisen die Abstandshalter 24a bis 24h einen quaderförmigen Grundkörper 31 auf, der während des Verfahrens nicht innerhalb der Fuge gleitet, sondern oberhalb der Fuge entlang von Fugenrändern 32, die durch Insert 11 und Rahmen 10 definiert werden.

Exemplarisch ist der Abstandshalter 24a in Fig. 3 in einer Seitenansicht dargestellt, zusammen mit einem Abschnitt einer Fugenwand 33. Wie aus Fig. 3 erkennbar, ist die Rippe 30 vorzugsweise konvex ausgebildet und definiert dadurch eine Anlaufschräge 34. Anstelle einer konvexen Ausbildung wäre alternativ auch eine dreiecksförmige Ausbildung oder eine noch andere Geometrie denkbar, solange eine Anlaufschräge 34 bereitgestellt wird. Fig. 3 zeigt die Position des Abstandshalters 24a zum Zeitpunkt des Erreichens der Fugenwand 33 (siehe auch Fig. 1, links oben). Über einen Pfeil 35 (siehe Fig. 3 und 4) wird die momentane Bewegungsrichtung des Abstandshalters 24a angezeigt. In Fig. 4 ist der Abstandshalter 24a kurze Zeit nach der Position der Fig. 3 zu sehen. Wie man erkennt, wird aufgrund der Ausbildung der Anlaufstelle 34 der Abstandshalter 24a aus der Fuge 12 herausgehebelt, so dass der Abstandshalter 24a sich (quasi-automatisch) aus der Fuge entfernt.

An dieser Stelle sei darauf hingewiesen, dass alle oben beschriebenen Teile für sich alleine gesehen und in ihrer Kombination, insbesondere die in den Zeichnungen dargestellten Details, als erfindungswesentlich beansprucht werden. Änderungen hiervon sind dem Fachmann geläufig.

### Bezugszeichenliste

- 10: Rahmen
- 11: Insert
- 12: Fuge
- 13: Teil-Fuge
- 14: Teil-Fuge
- 15: Teil-Fuge
- 16: Teil-Fuge
- 17: Fugen-Grund
- 18: Erste Fugen-Wand
- 19: Zweite Fugen-Wand
- 20: Außenkante
- 21: Vorsprung
- 22: Dicht- und/oder Klebstoff
- 23: Düsenelement
- 24a: Abstandshalter
- 24b: Abstandshalter
- 24c: Abstandshalter
- 24d: Abstandshalter
- 24e: Abstandshalter
- 24f: Abstandshalter
- 24g: Abstandshalter
- 24h: Abstandshalter
- 25: Pfeil
- 26: Ecke
- 27: Eckbereich
- 28: Gestrichelte Linie
- 29: Flächenabschnitt
- 30: Rippe
- 31: Grundkörper
- 32: Fugen-Rand
- 33: Fugen-Wand
- 34: Anlaufschräge
- 35: Pfeil

## Patentansprüche

1. Verfahren zum Ausfüllen einer Fuge (12) mit einem Kleb- und/oder Dichtstoff (22), umfassend:
a) Positionieren von einem ersten Teil, insbesondere einem Insert (11), und einem zweiten Teil, insbesondere einem Rahmen (10), so dass erstes und zweites Teil die Fuge (12) ausbilden;
b) Einbringen eines beweglichen Abstandshalters (24a bis 24h) in die Fuge (12);
c) Positionieren eines Düsenelementes (23) über der Fuge (12);
d) Verfahren des Düsenelementes (23) entlang der Fuge (12) derart, dass das Düsenelement (23) an den Abstandshalter (24a bis 24h) stößt und diesen vorwärtsbewegt; und
e) Ausstoßen des Kleb- und/oder Dichtstoffes (22) aus einer Austrittsdüse des Düsenelementes (23) während des Schrittes d).

2. Verfahren nach Anspruch 1,
**dadurch gekennzeichnet, dass**
der Abstandshalter (24a bis 24h) beim Erreichen eines Fugenendes oder einer Fugenecke (26) aus der Fuge (12) entfernt wird.

3. Verfahren nach Anspruch 1 oder 2, insbesondere nach Anspruch 2,
**dadurch gekennzeichnet, dass**
der Abstandshalter (24a bis 24h) eine Anlaufschräge (34) aufweist derart, dass er beim Anstoßen an ein Fugenende oder eine Fugenecke herausgehoben wird und/oder
**dadurch gekennzeichnet, dass**
an einem Fugenende oder einer Fugenecke (26) eine Anlaufschräge vorgesehen ist derart, dass der Abstandshalter (24a bis 24h) beim Anlaufen gegen das Fugenende oder die Fugenecke herausgehoben wird.

4. Verfahren nach einem der vorhergehenden Ansprüche,
**dadurch gekennzeichnet, dass**
mehrere bewegliche Abstandshalter (24a bis 24h) in die Fuge (12) eingebracht werden, wobei vorzugsweise, zumindest teilweise, mehrere Abstandshalter (24a bis 24h) gleichzeitig durch das Düsenelement (23) vorwärtsbewegt werden.

5. Verfahren nach einem der vorhergehenden Ansprüche,
**dadurch gekennzeichnet, dass** die Fuge (12) mehrere, einen Winkel gegeneinander aufweisende Teil-Fugen (13, 14, 15, 16) umfasst und in jeder Teil-Fuge (13, 14, 15, 16) mindestens ein insbesondere beweglicher, Abstandshalter (24a bis 24h) eingebracht wird.

6. Verfahren nach einem der vorhergehenden Ansprüche,
**dadurch gekennzeichnet, dass** die Fuge (12) eine rechteckförmige Form hat und vier Teil-Fugen (13, 14, 15, 16) aufweist, wobei je zwei aneinander grenzende Teilfugen senkrecht zueinander orientiert sind, wobei weiter vorzugsweise in jeder Teil-Fuge (13, 14, 15, 16) mindestens ein, vorzugsweise je zwei, Abstandshalter (12) angebracht werden, wobei vorzugsweise je zwei Abstandshalter (12), vor einem Verschieben derselben, in je einen Eckbereich der Fuge eingebracht werden.

7. Verfahren nach einem der vorhergehenden Ansprüche,
**dadurch gekennzeichnet, dass** das Düsenelement (23) beim Durchfahren einer Fugenecke (26) seine Orientierung beibehält.

8. Verfahren nach einem der vorhergehenden Ansprüche,
**dadurch gekennzeichnet, dass** bei einem Fugeneck (26) zumindest eine der innenseitig an das Fugeneck (26) angrenzenden Flächenabschnitte (29) des ersten oder zweiten Teils mit einer Abdeckung, insbesondere einem Tape, abgedeckt werden.

9. Verfahren nach einem der vorhergehenden Ansprüche,
**dadurch gekennzeichnet, dass** als Kleb- und/oder Dichtstoff (22) ein Kleb- und/oder Dichtstoff verwendet wird, der eine Viskosität im Ausgangszustand, während des Ausbringens aus der Austrittsdüse, aufweist derart, dass auftretende Relativkräfte zwischen Rahmen (10) und Insert (11) durch den Kleb- und/oder Dichtstoff ausgeglichen werden, wobei der Kleb- und/oder Dichtstoff (22) vorzugsweise eine Viskosität von größer gleich 10³, weiter vorzugsweise größer gleich 10⁴, noch weiter vorzugsweise größer gleich 10⁵ mPa * s aufweist.

10. Verwendung eines Abstandshalters mit einer Anlaufschräge (34) zum Einstellen der Breite einer Fuge (12) zwischen zwei Teilen, insbesondere zwischen einem Rahmen (10) und einem Insert (11), für ein Verfahren, insbesondere nach einem der Ansprüche 1-9, zum Befüllen der Fuge (12) mit einem Kleb- und/oder Dichtstoff (22).

11. System zum Ausfüllen einer Fuge (12) mit einem Dicht- und/oder Klebstoff (22), insbesondere gemäß dem Verfahren nach einem der Ansprüche 1-9 und/oder für die Verwendung gemäß Anspruch 10, umfassend:
- ein bewegliches Düsenelement (23) mit einer Austrittsöffnung;
- mindestens einen beweglichen Abstandshalter (24a bis 24h) und
- eine Anlaufschräge (34) zum Anheben des Abstandshalters (24a bis 24h).

12. System nach Anspruch 11,
**dadurch gekennzeichnet, dass**
der Abstandshalter (24a bis 24h) die Anlaufschräge (34) aufweist, wobei die Anlaufschräge (34) vorzugsweise durch einen konvexen Abschnitt ausgebildet wird.

13. System nach Anspruch 11 oder 12,
**dadurch gekennzeichnet, dass**
das System einen Kleb- und/oder Dichtstoff (22) umfasst, wobei der Kleb- und/oder Dichtstoff eine Viskosität von größer gleich 10³, vorzugsweise größer gleich 10⁴, noch weiter vorzugsweise größer gleich 10⁵ mPa * s aufweist.

14. Abstandshalter (24a bis 24h) für ein Verfahren zum Ausfüllen einer Fuge (12) mit einem Kleb- und/oder Dichtstoff (22), insbesondere gemäß dem Verfahren nach einem der Ansprüche 1-9 und/oder für die Verwendung gemäß Anspruch 10 und/oder für das System gemäß einem der Ansprüche 11-13, wobei der Abstandshalter (24a bis 24h) eine Anlaufschräge (34) aufweist derart, dass der Abstandshalter (24a bis 24h) beim Anstoßen an eine Kante nach oben gehoben wird.

15. Abstandshalter nach Anspruch 14,
**dadurch gekennzeichnet, dass** der Abstandshalter (24a bis 24h) einen quaderförmigen Grundkörper (31) aufweist und/oder
eine, vorzugsweise konvexe, beispielsweise die Anlaufschräge ausbildende, Rippe, die insbesondere an eine der Quaderflächen angeordnet ist, aufweist.
